# EUROPEAN PATENT SPECIFICATION

(11) **EP 1 406 411 B1**
(45) Date of publication and mention of the grant of the patent: **24.05.2006**
(21) Application number: 02748876.6
(22) Date of filing: 09.07.2002
(51) Int. Cl.: H04L 9/32

(54) **PORTABLE SYSTEM FOR STORING AND EMITTING PRE-ESTABLISHED CODES FOR AUTHENTICATION PURPOSES AND THE AUTHENTICATION METHOD USED**
TRAGBARES SYSTEM ZUM SPEICHERN UND EMITTIEREN VOREINGERICHTETER CODES FÜR AUTHENTISIERUNGSZWECKE UND VERWENDETES AUTHENTISIERUNGSVERFAHREN
SYSTEME PORTATIF DE STOCKAGE ET DE TRANSMISSION DE CODES PRE-ETABLIS POUR L'AUTHENTIFICATION ET PROCEDE D'AUTHENTIFICATION ASSOCIE

(30) Priority: 09.07.2001 ES 200101599
(43) Date of publication of application: 07.04.2004
(73) Proprietor: Cantero Real, Eduardo, 28250 Torrelodones (ES); Vega Crespo, José Agustin Francisco Javier, 28250 Torrelodones (ES)
(72) Inventor: Cantero Real, Eduardo, 28250 Torrelodones (ES); Vega Crespo, José Agustin Francisco Javier, 28250 Torrelodones (ES)
(74) Representative: Garcia-Cabrerizo y del Santo, Pedro Maria
(86) International application number: PCT/ES2002/000342
(87) International publication number: WO 2003/007541

(56) References cited:
- EP-A- 0 447 380
- EP-A- 0 817 420
- ES-T- 2 117 764
- PATENT ABSTRACTS OF JAPAN vol. 2000, no. 23, 10 Febrero 2001 (2001-02-10) & JP 2001 175166 A (NEC NETWORK SENSA KK), 29 Junio 2001 (2001-06-29)
- PATENT ABSTRACTS OF JAPAN vol. 2000, no. 16, 8 Mayo 2001 (2001-05-08) & JP 2001 005784 A (NEC SOFTWARE KYUSHU LTD), 12 Enero 2001 (2001-01-12)

## Description

### OBJECT OF THE INVENTION

The object of the present invention is an authentication procedure as claimed in claim 1. The procedure uses a portable system for storing and issuing dynamic keys, created randomly, which have been exchanged between two or more participants in future dialogues for their use as an authentication and/or encryption element in the dialogues to be held between them.

The authentication consists of a mutual recognition between users, to ensure that each interlocutor is who it claims to be.

The portable system stores and issues the keys, which will consist of strings of four digits that have been predetermined randomly.

The present invention is characterised in that the authentication system is portable and can be carried anywhere.

A further characteristic of the present invention is that the digits that form the strings are not obtained as a function of any time variable, so that their validity is not limited to any time period. In order to carry out the authentication procedure it is only necessary that the participants in the dialogue share the digits, and it is possible to extend these dialogues to more participants.

Thus, the system is characterised by enabling authentication among the participants in a dialogue without requiring a synchronised connection of said participants.

It should be remarked that the system is scalable as regards the digits forming a string to be used in a dialogue for which the authentication support is provided, as well as the fact that a dialogue can take place using more than one string of digits.

The system is characterised by its autonomy, as it is provided with a solar panel in charge of its power supply

### BACKGROUND OF THE INVENTION

Hitherto, most authentication systems for participants in a dialogue act in a single sense, that is, the participant initiating the dialogue is the only one authenticated, and it is assumed that the other one is the participant that was called. This authentication system in fact has the disadvantage of being incomplete, and in order to solve this drawback complex and closed systems are designed with a rigidity that prevents their use from environments other than those for which the system was designed.

In document EP 0 447 380 the problem to be solved is that of the bidirectional authentication between a base station and a plurality of mobile stations. The solution proposed is a method by which the base station and the mobile share the mobile number (public), the PIN (secret) and an encryption method (secret). The base station generates two random numbers (RAND).

One of them is encrypted by the base station, which sends the pair RAND-Response to the mobile so that this can authenticate the base station. The other is encrypted to form a second pair RAND-Response that is sent to the base station, this way it can authenticate the mobile.

Many other authentication systems are encompassed within a data transfer protocol between two units (two computers or two persons) where their mutual authentication is carried out by a synchronised key generation process. Said keys are exchanged continuously, so that after the synchronisation between the two units has been established and a key has been generated, said key is valid only for a certain predetermined period that corresponds to the periods in which changes the time variable used in the key generation algorithm

These authentication systems have the disadvantage of requiring a synchronisation between the elements, so that once these are synchronised keys can be exchanged that are valid for a predefined period. These systems are complex and in certain cases time constraints limit their use.

Therefore, the object of the present invention is to provide a portable system for storing and issuing predetermined keys, so that it is not necessary to synchronise the key issuers of the interlocutors in order to obtain their full authentication.

### DESCRIPTION OF THE INVENTION

The present invention of a portable system for storing and issuing randomly predetermined keys for authentication consists of a system that can have the size of a portable calculator, on which a string of numbers has been recorded which will be used in the authentication procedure.

The system lacks any algorithm for generating numbers, and instead it has a stored table of randomly generated numbers; thus, it is not possible to know how the numbers that appear on the display have been calculated.

Te number table stored in the portable system is also provided to the participants in the dialogue. One of the interlocutors, that may be a computer, will have as many tables as the number of interlocutors in its dialogues, with a single one used for each interlocutor (system user) that will correspond with the one held in said interlocutor.

In order to access the keys stored in the machine an access code is entered in the portable device known only to its owner. This device access code shall have been set by the owner when initialising the unit. If this access code were forgotten a new one could be entered to replace the old one, by using a second code provided by the supplier of the device. If an incorrect access code is entered three consecutive times the device will be blocked, and its reinitialisation will require identification before the supplier, that will provide another code to enable this operation.

The internal table stored in the machine will comprise a fixed number of rows, with each row having four or more columns holding numbers. The first number will identify the row in the table and will comprise as many digits as is advisable in view of the security level required for the environment of the dialogues. This number will allow numbering the dialogues established between interlocutors. When the device user requests a set of keys for a dialogue the device will show on a first display the first digit of the row, which will remain on the display until the other digits are shown on a second display and the dialogue ends. The other digits of the row will be shown on the second display and each will be preceded by a letter, starting with the letter A, which will provide its storage order within a row and a reference for each of the digits stored in a row.

Each time all the digits of a row are displayed the device will mark this row as already used and it will not appear on the display again for use in another dialogue.

When the device user requests a set of keys for a dialogue the device will provide the first row it finds that has not been used before.

To describe the procedure that will allow authentication of the participants by means of this device, a description is provided below of the process between two interlocutors.

Once the two participants in a dialogue, say a person X and a computer Y, have the same table, and after the owner X of the device has entered its access code in the device and requests by a keystroke a set of keys for a dialogue, the device will show on a first display a number that will be used as the number of the dialogue to be established with the other interlocutor, Y. This dialogue number together with the reference number of the device will be sent to the other interlocutor, Y.

The interlocutor Y receiving these two numbers uses the reference number to find the table to be used and uses the dialogue number to find the row with the numbers used as the keys in this dialogue. It then extracts the first key number from this row and sends it to interlocutor X, who initiated the dialogue. The interlocutor X will check that this key agrees with the number shown on the second display, thereby identifying the interlocutor Y.

When X must send new data to Y it will instruct the device to display the following key in the row, attaching this number to the message that is sent, as well as the device and dialogue reference numbers.

Lastly, interlocutor Y can accept the dialogue or supply more data to X using a third key, attaching the same reference and dialogue numbers, which will be checked by X by viewing said third key in the display.

In addition to the above described method for using the device in which the device user requests a set of keys for a new dialogue, there is another mode of use in which the user asks the device to display the keys associated to the dialogue number that he/she enters in it and that will correspond to that received from its interlocutor in this dialogue.

The number of keys stored in a row will depend on the specific needs of the dialogues to be supported.

Depending on the security requirements of the environment in which the dialogue takes place, the keys, i.e. the digits associated to a dialogue number, can be used by a software component to encrypt the message that is sent (except for the device reference number and the dialogue number) and to unencrypt it when received to obtain its contents and the associated key after entering the key agreed for encryption, that can be the following number in the row of the key associated to the message.

This same procedure for using the device is valid for more interlocutors. In this case it is only necessary that the numbers stored in a row be shared by all and be requested to each other according to the characteristics of the dialogue.

In the case of more than two interlocutors, if the dialogue requires a greater security the keys stored in each row can be divided into groups. Each group of keys available for a participant will be shared by said participant and the other participant, so that each row of its key table will have as many groups of keys as there are interlocutors with the participant. Thus, only the emitter and receiver of a message share the keys and it is not possible to impersonate another participant in the dialogue. This allows that if any of the participants in the dialogue does not agree to end it the dialogue cannot be considered as correctly ended, as no other participant can impersonate the former.

### DESCRIPTION OF THE DRAWINGS

As a complement of the description provided below and in order to aid a better understanding of its characteristics, the present description is accompanied by a set of drawings with figures where, for purposes of illustration only and in a non-limiting manner, the most significant characteristics of the invention are shown.

Figure 1 shows a schematic representation of the portable system, showing all of its component parts.

Figure 2 shows the tables of the user and of the server or second interlocutor, their configuration and the mode of exchanging the numbers that they comprise.

### PREFERRED EMBODIMENT

In view of the aforementioned figures, a description of a preferred embodiment of the invention is provided together with an explanation of the drawings.

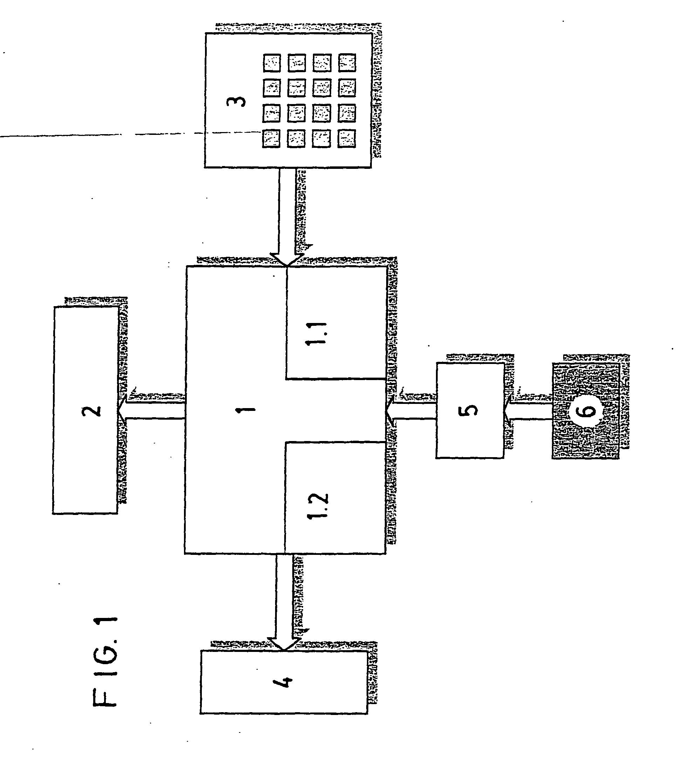

Figure 1 shows the portable system composed of a low-consumption processor with a data memory (1.2) and a program memory (1.1). Said processor receives the information provided by the keyboard (3) or by any other means of data input used to supply the key allowing access to the system.

The processor communicates with a display (2), which, in a numerical code or in any other, will show the digits stored in the row to allow the authentication. It is also provided with a communications port (4) for communication with other devices participating in the dialogue to allow receiving or emitting keys shared by the interlocutors. Finally, it is provided with a dc-dc converter to supply the power required by the processor (1). The power is supplied to the converter (5) from a solar panel (6).

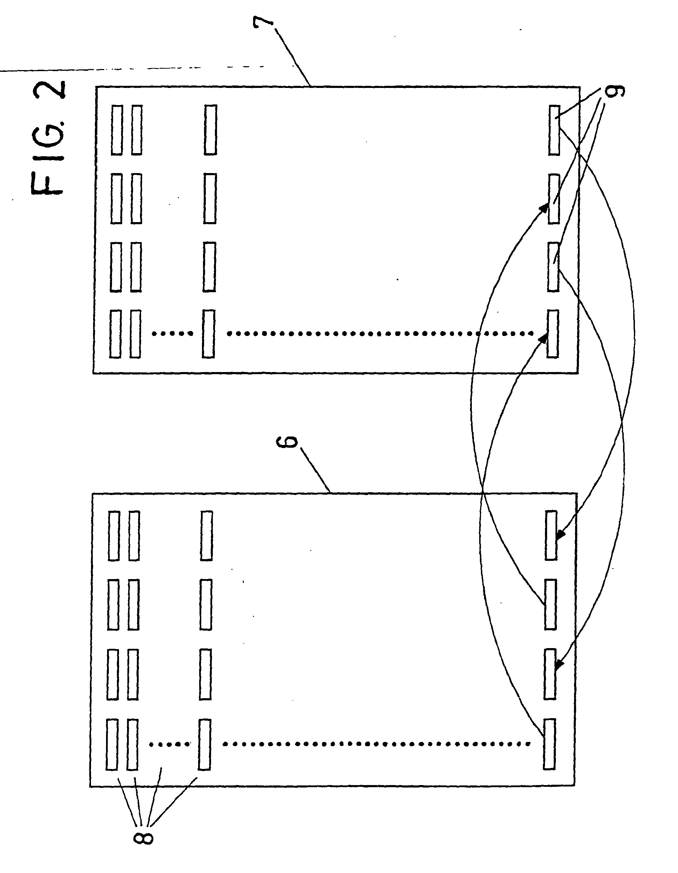

Figure 2 shows the tables (6) and (7), which are respectively the table found in the portable system of the user, and the table in the computer or second interlocutor. No other user can have another identical table unless it is requested as another interlocutor in the dialogue.

The digits stored in the rows are randomly generated prior to being recorded in the devices. They are generated by randomisation modules so that there is no way to decipher the table digits.

The two tables (6) and (7) thus contain the same information. This information is arranged in rows (8) of four or more columns (9).

During the authentication process, after the user has entered the access code and requested set of keys for a new dialogue, four or more numbers are issued (the dialogue identifier and three or more keys) belonging to one row, and the user must send, together with the reference number of the device, the first and third umbers to the computer or second interlocutor. The reference number is used by the interlocutor to know which table it must use in the dialogue that is being initiated and the first number is used to know which row is being used, and to check, if this row exists, the authenticity of its interlocutor and the data received from said interlocutor. The third and successive numbers occupying an odd-numbered column are used to confirm the authenticity of the following messages sent to the interlocutor in the dialogue.

In addition, the computer or second interlocutor sends to the user the second and successive numbers occupying an even-numbered column of the row with the same purpose. The second number or key is used by the user to ensure that the server is in fact who it claims to be, after checking the agreement with the second number. Also, the numbers after the third one can be used to encrypt/unencrypt the messages as determined in the dialogue development procedure.

It is not considered necessary to extend this description to allow an expert in the field to understand the scope of the invention and the advantages derived thereof.

The terms employed in this description must be understood in a wide and non-limiting sense.

## Claims

1. Authentication procedure for use in a dialogue between a user having a portable device including a processor (1), a memory (1.1) (1.2), a display (2), and a keyboard (3), and an interlocutor having a computer including a memory, **characterized in that** both the user and the interlocutor share the same numbers previously and randomly generated and stored in identical tables (6) (7), so that after the user enters an access code the system accesses a row (8) of four or more numbers and the first number is sent with the reference number of the device of the user to the interlocutor, so that the reference number of the device is used in the interlocutor's device to identify the table, whilst the first number is used to identify the row(8), the second number is then sent by the interlocutor to the user, which allows the user to check the authenticity of the interlocutor after comparing it to the second number in his own table, the third number is sent by the user to the interlocutor together with the information to be transmitted, confirming that the user is the correct one, and the fourth number is provided by the interlocutor to the user confirming the reply; and so successively, exchanging as many numbers as required by the dialogue; and after the numbers in a row (8) of the table have been used for an authentication process, this row is marked so that it is not used again.

2. Authentication procedure, according to claim 1, **characterized in that** the third and successive numbers can be used as keys for encription/unencryption of the information transmitted, after the authentication process, throughout the dialogue.

3. Authentication procedure, according to claim 1, **characterized in that** in the case of two or more interlocutors, the keys stored in each row (8) of the tables (6) (7) can be divided into two or more groups, with each group of keys available to a user being shared by said user and by another interlocutor participating in the dialogue, so that each row (8) of its table of keys will have as many groups of keys as there are interlocutors participating with the user in the dialogue.

## Patentansprüche

1. Authentisierungsverfahren für den Gebrauch in einem Dialog zwischen einem Benutzer, der ein tragbares Gerät hat, das einen Prozessor (1), einen Speicher (1.1, 1.2), ein Display (2) und eine Tastatur (3) umfasst, und einem Gesprächspartner mit einem Computer, der einen Speicher einschließt, **dadurch gekennzeichnet, dass** sowohl der Benutzer als auch der Gesprächspartner dieselben vorher und willkürlich erzeugen Nummern teilen, die in identischen Tabellen (6, 7) gespeichert sind, so dass, nachdem der Benutzer den Zugriffscode eingegeben hat, das System Zugriff auf eine Zeile (8) von vier oder mehr Nummern hat und die erste Nummer mit der Referenznummer des Geräts des Benutzers zum Gesprächspartner gesandt wird, so dass die Referenznummer des Geräts im Gerät des Gesprächspartners verwendet wird, um die Tabelle zu identifizieren, während die erste Nummer dazu dient, um die Zeile (8) zu identifizieren, wonach die zweite Nummer vom Gesprächspartner dem Benutzer übermittelt wird, was dem Benutzer erlaubt, die Authentizität des Gesprächspartners zu überprüfen, nachdem er dieselbe mit der zweiten Nummer seiner Tabelle vergleicht hat, dass die dritte Nummer vom Benutzer an den Gesprächspartner zusammen mit der zu übertragenden Information gesandt wird, wobei sie bestätigt, dass den Benutzer der Richtige ist, und dass die vierte Nummer vom Gesprächspartner dem Benutzer mitgeteilt wird, wobei die Antwort bestätigt wird, und so fortlaufend, wobei so viele Nummern ausgetauscht werden, wie für den Dialog notwendig sind; und, nachdem die Nummern in einer Zeile (8) der Tabelle für ein Authentisierungsverfahren verwendet wurden, wird diese Zeile **gekennzeichnet**, damit sie nicht noch einmal verwendet wird.

2. Authentisierungsverfahren nach Anspruch 1, **dadurch gekennzeichnet, dass** die dritte Nummer und die fortlaufenden als Code für Verschlüsselung / Entschlüsselung der übertragenen Information, nach dem Authentisierungsverfahren, über den Dialog verwendet werden können.

3. Authentisierungsverfahren nach Anspruch 1, **dadurch gekennzeichnet, dass** im Falle von zwei oder mehr Gesprächspartnern die in jeder Zeile (8) der Tabellen (6, 7) gespeicherten Codes in zwei oder mehr Gruppen aufgeteilt werden können, wobei jede Code-Gruppe, die für einen Benutzer verfügbar ist, von diesem Benutzer und einem anderen Gesprächspartner geteilt wird, der am Dialog teilnimmt, so dass jede Zeile (8) seiner Code-Tabelle so viel Code-Gruppen wie Gesprächspartner hat, die mit dem Benutzer an dem entsprechenden Dialog teilnehmen.

## Revendications

1. Procédé d'authentification pour l'utilisation dans un dialogue entre un utilisateur ayant un dispositif portable, qui inclut un processeur (1), une mémoire (1.1, 1.2), un écran (2) et un clavier (3), et un interlocuteur ayant un ordinateur, qui inclut une mémoire, **caractérisé en ce qu'**aussi bien l'utilisateur que l'interlocuteur partagent les mêmes numéros générés préalablement et aléatoirement et stockés dans des tableaux (6, 7) identiques pour que, après que l'utilisateur introduise un code d'accès, le système accède à une file (8) de quatre ou plus de numéros et le premier numéro est envoyé avec le numéro de référence du dispositif de l'utilisateur à l'interlocuteur pour que le numéro de référence du dispositif soit utilisé dans le dispositif de l'interlocuteur pour identifier le tableau, tandis que le premier numéro est utilisé pour identifier la file (8), 1 deuxième numéro est envoyé alors par l'interlocuteur à l'utilisateur, lequel permet que l'utilisateur vérifie l'authenticité de l'interlocuteur après l'avoir comparé avec le deuxième numéro sur son tableau, le troisième numéro est envoyé par l'utilisateur à l'interlocuteur avec l'information à transmettre, en confirmant que l'utilisateur est le correcte, et le quatrième numéro est pourvu par l'interlocuteur à l'utilisateur en confirmant la réponse; et ainsi de suite, en échangeant autant de numéros que le dialogue requiert; et après l'utilisation des numéros dans une file (8) du tableau pour un procédé d'authentification, cette file est marquée pour qu'elle ne soit plus utilisée.

2. Procédé d'authentification selon la revendication 1, **caractérisé en ce que** les numéros troisième et successifs peuvent être utilisés comme des clefs pour le chiffrage/déchiffrage de l'information transmise, après le procédé d'authentification, à travers le dialogue.

3. Procédé d'authentification selon la revendication 1, **caractérisé en ce que**, dans le cas de deux ou plus interlocuteurs, les clefs stockées dans chaque file (8) des tableaux (6, 7) peuvent se diviser en deux ou en plus de groupes, chaque groupe de clefs disponible pour un utilisateur étant partagé par cet utilisateur et un autre interlocuteur participant au dialogue, de manière que chaque file (8) de son tableau de clefs aura autant de groupes de clefs que d'interlocuteurs participant avec l'utilisateur au dialogue.
